# EUROPEAN PATENT SPECIFICATION

(11) **EP 2 075 862 B1**
(45) Date of publication and mention of the grant of the patent: **30.06.2010**
(21) Application number: 08021675.7
(22) Date of filing: 12.12.2008
(51) Int. Cl.: H01M 2/26, H01M 4/64, H01M 4/66, H01M 10/04, H01G 9/155

(54) **Electrode for electrochemical device and electrochemical device**
Elektrode für elektrochemische Vorrichtung und elektrochemische Vorrichtung
Électrode pour dispositif électrochimique et dispositif électrochimique

(30) Priority: 28.12.2007 JP 2007340307
(43) Date of publication of application: 01.07.2009
(73) Proprietor: TDK Corporation, Tokyo 103-8272 (JP)
(72) Inventor: Yoshihiko, Ohashi, Chuo-ku Tokyo 103-8272 (JP); Kiyonori, Hinoki, Chuo-ku Tokyo 103-8272 (JP); Kazuo, Katai, Chuo-ku Tokyo 103-8272 (JP); Keita, Kobayashi, Chuo-ku Tokyo 103-8272 (JP)
(74) Representative: Grünecker, Kinkeldey, Stockmair & Schwanhäusser Anwaltssozietät

(56) References cited:
- EP-A- 0 973 214
- EP-A- 1 020 943
- JP-A- 2001 110 453
- US-A1- 2002 187 395

## Description

### BACKGROUND OF THE INVENTION

### Field of the Invention

The present invention relates to an electrode for electrochemical devices, and to an electrochemical device.

### Related Background Art

Spirally wound electrochemical devices are formed by winding electrodes in the longitudinal direction, the electrodes being obtained by forming active material layers on an elongated collector. When the length of the collector in the longitudinal direction is substantial, the collector is provided with a plurality of leads, spaced apart from each other, in the longitudinal direction of the collector, in order to suppress heat generation, polarization and the like that result from concentration of large currents (see, for instance, Japanese Patent Application Laid-open Nos. H7-192717, H11-283882, H11-283883, H11-317218, 2000-106167, 2000-182656, 2000-110453, 2006-260892 and 2006-286404).

### SUMMARY OF THE INVENTION

During winding, same-polarity leads have conventionally been disposed on the collector overlapping substantially with each other, without paying special attention to the arrangement spacing between leads or to the number of leads thus arranged. To be used with greater efficiency, the electrochemical device must exhibit lower impedance. In terms of lowering the impedance of the electrochemical device, it may presumably suffice to reduce the contribution of the collector to resistance, by simply increasing the number of leads and narrowing the lead arrangement spacing.
However, the inventors have found that leakage current increases when the lead arrangement spacing is too narrow. An increase in leakage current is accompanied by energy loss, and is thus undesirable. That is, the inventors have found that there is a suitable range for the lead arrangement spacing.

On the basis of the above finding, it is an object of the present invention to provide an electrode for electrochemical devices that allows reducing both impedance and leakage current, and to provide an electrochemical device using the electrode for electrochemical devices.

The electrode for an electrochemical device according to the present invention comprises an elongated collector, a lead provided halfway along a longitudinal direction of the collector, and an active material layer provided on the collector.

When Lₐ (m) is a distance from one end of the collector, in the longitudinal direction, up to said lead, L_{b} (m) is a distance from the other end of the collector, in the longitudinal direction, up to the lead, and p (Ωm) is a resistivity of the collector at 25°C, where Lₒₚₜ (m) being 1.9×10⁶ρ, the Lₐ (m) and L_{b} (m) are from 0.95 Lₒₚₜ to 1.05 Lₒₚₜ respectively.

Another electrode for an electrochemical device according to the present invention comprises an elongated collector, n leads (n being an integer equal to 2 or greater) provided spaced apart from each other in the collector, in a longitudinal direction of the collector, and an active material layer provided on the collector.

When Lₐ (m) is a distance from one end of the collector, in the longitudinal direction, up to a lead closest to the one end, L_{b} (m) is a distance from the other end of the collector, in the longitudinal direction, up to a lead closest to the other end, L₁, L₂, ..., Lₙ₋₁ (m) are distances between adjacent leads, and p (Ωm) is a resistivity of the collector at 25°C, where Lₒₚₜ (m) being 1.9×10⁶p, the Lₐ and L_{b} are from 0.95 Lₒₚₜ to 1.05 Lₒₚₜ respectively, and (L₁/2), (L₂/2),..., (Lₙ₋₁/2) respectively range from 0.95 Lₒₚₜ to 1.05 Lₒₚₜ.

The electrochemical device according to the present invention comprises a pair of electrodes, both electrodes being the above-described electrode for electrochemical devices.

Such an electrode for electrochemical devices affords an electrochemical device having low impedance and low leakage current

### BRIEF DESCRIPTION OF THE DRAWINGS

Fig. 1 is a schematic perspective-view diagram of an electrode for electrochemical devices according to a first embodiment;
Fig. 2 is a schematic perspective-view diagram of an electrode for electrochemical devices according to a second embodiment;
Fig. 3 is a schematic perspective-view diagram of an electrode for electrochemical devices according to a third embodiment;
Fig. 4 is a schematic perspective-view diagram of an electrode for electrochemical devices according to a fourth embodiment;
Fig. 5 is a partial-cutaway schematic perspective-view diagram illustrating an example of an electrochemical device according to an embodiment of the present invention;
Fig. 6 is a partial-cutaway schematic perspective-view diagram illustrating another example of an electrochemical device according to an embodiment of the present invention; and
Fig. 7 is a table listing conditions and results in examples and comparative examples.

### DESCRTPTION OF THE PREFERRED EMBODIMENTS

Preferred embodiments of the present invention are explained in detail below with reference to accompanying drawings. In the drawings, identical or equivalent elements are denoted with identical reference numerals, and recurrent explanations thereof are omitted. The dimensional ratios in the drawings do not necessarily match actual dimensional ratios.

### First embodiment

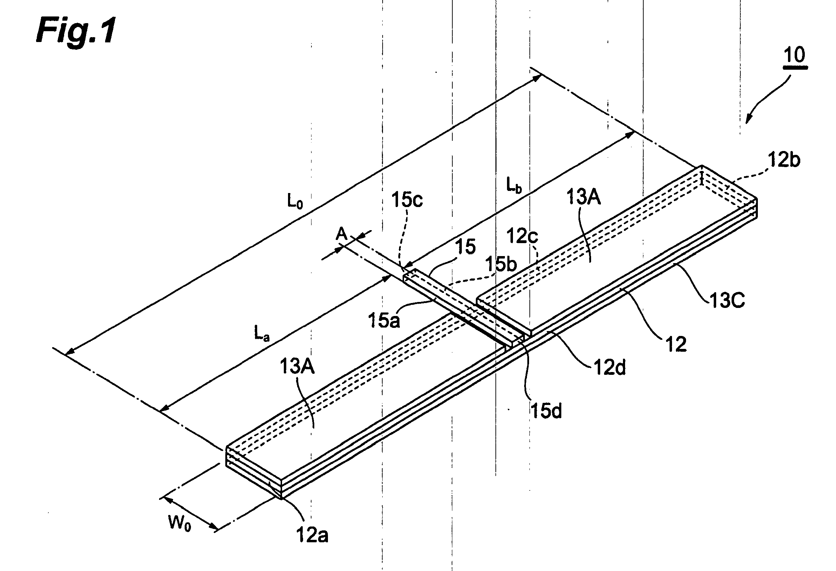

An electrode for electrochemical devices 10 according to a first embodiment will be explained with reference to Fig. 1. The electrode for electrochemical devices 10 comprises mainly a collector 12, active material layers 13A, 13C containing an active material, and a lead 15.

The collector 12 is a conductive member in the form of a rectangular elongated plate. Although not particularly limited thereto, the material of the collector is preferably a metallic material, such as copper, aluminum or nickel. For instance, the electric resistivity p of copper, aluminum and nickel are 1.68×10⁻⁸ Ωm, 2.65 × 10⁻⁸ Ωm, 6.99×10⁻⁸ Ωm, respectively. The thickness of the collector is not particularly limited, and may range from 10 to 50 µm. Also, the length L₀ in the longitudinal direction and the length W₀ in the direction (width direction) perpendicular to the longitudinal direction are not particularly limited. The length L₀ in the longitudinal direction may range, for instance, from 80 to 150 mm, while the length W₀ in the width direction may range, for instance, from 12 to 16 mm. The aspect ratio (L₀/W₀) of the collector is preferably 5 to 10, more preferably about 7.0.

The lead 15 is a conductive member that plays the role of current input terminal in the collector 12. The lead 15 is shaped as a rectangular plate, the longitudinal direction of the lead 15 being perpendicular to the longitudinal direction of the collector 12. In the present embodiment, one end face 15d of the lead 15 in the longitudinal direction extends up to one side face 12d of the collector 12 in the direction (width direction) perpendicular to the longitudinal direction of the collector 12, while the other end face 15c of the lead 15, in the longitudinal direction, -extends beyond the other side face 12c of the collector 12 in a direction (width direction) that is perpendicular to the longitudinal direction of the collector 12. The thickness of the lead 15 is not particularly limited, and may be for instance similar to that of the collector 12. The length of the lead 15 in the longitudinal direction can be arbitrarily set in accordance with the way in which the lead is to be used, provided that the other end face 15c of the lead 15 protrudes beyond the side face 12c of the collector 12. The length A of the lead 15, in a direction perpendicular to the longitudinal direction of the lead 15, is best sufficiently shorter than the length L₀ of the collector 12 in the longitudinal direction of the latter. For instance, the lead 15 may protrude about 10 to 25 mm beyond the side face 12c of the collector 12, and the width A of the lead 15 may range, for instance, from 2 to 10 mm.

The lead 15 and the collector 12 are fixed together and electrically connected by way of, for instance, a conductive adhesive, soldering or welding. Side faces 15a and 15b of the lead 15 extending in the longitudinal direction thereof are respectively parallel to end faces (one end, other end) 12a, 12b that are perpendicular to the longitudinal direction of the collector 12.

The active material layers 13A, 13C, which are layers containing an active material, are provided on the front and rear faces, respectively, of the collector 12. Specifically, the active material layer 13C is provided over substantially the entire surface of the collector 12 where the lead 15 is not provided. Meanwhile, the active material layers 13A; 13A are dividedly provided on the surface of the collector 12 on which the lead 15 is provided, at portions other than the portion at which the lead 15 is provided.

The active material layers 13A, 13C comprise preferably an active material and a binder. More preferably, the active material layers 13A, 13C comprise a conduction enhancer.

Various active materials, not particularly limited, can be used as active materials for positive electrodes of lithium-ion secondary batteries, so long as the active material is capable of storing and releasing lithium ions, desorbing and intercalating lithium ions, and allows reversible doping and dedoping of lithium ions and counter anions of lithium ions (for instance, ClO₄⁻). The active material may be, for instance, a lithium-containing metal oxide. Examples of lithium-containing metal oxides include, for instance, a lithium oxide comprising at least one metal selected from the group consisting of Co, Ni and Mn, such as LiMO₂ (wherein M denotes Co, Ni or Mn) or LiCoₓNi₁₋ₓO₂, LiMn₂O₄ and LiCoₓNi_{y}Mn_{1-x-y}O₂ (wherein x and y are greater than 0 and smaller than 1), lithium vanadium compound (LiV₂O₅) or olivine-like LiMPO₄ (wherein M denotes Co, Ni, Mn or Fe).

Various active materials, not particularly limited, can be used as active materials for negative electrodes of lithium-ion secondary batteries, so long as the active material is capable of storing and releasing lithium ions, desorbing and intercalating lithium ions, and allows reversible doping and dedoping of lithium ions and counter anions of lithium ions (for instance, ClO₄⁻). Examples include, for instance, natural graphite, artificial graphite, mesocarbon microbeads, mesocarbon fibers (MCF), coke glass like carbon, carbonaceous materials such as fired products of organic compounds or the like, metals that can combine with lithium, such as Al, Si or Sn, or amorphous compounds having, as a main component, an oxide such as SiO₂ or SnO₂.

The electrodes for electric double layer capacitors may be, for instance, various porous materials having electron conductivity. Suitable examples include, for instance, natural graphite, artificial graphite, mesocarbon microbeads, mesocarbon fibers (MCF), coke, glass-like carbon or carbonaceous materials such as fired products of organic compounds or the like.

As the binder there may be used various bonding agents, not particularly limited, provided that they can fix the above active material and, preferably also the conduction enhancer, to the collector. Examples thereof include, for instance, a fluororesin such as polyvinylidene fluoride (PVDF) or polytetrafluoroethylene (PTFE), or a mixture of styrene-butadiene rubber (SBR) with a water-soluble polymer (carboxymethylcellulose, polyvinyl alcohol, sodium polyacrylate, dextrin, gluten and the like).

Examples of the conduction enhancer include, for instance, carbon black, metal micropowders of copper, nickel, stainless steel, iron or the like, mixtures of carbon materials and metal micropowders, or conductive oxides such as ITO. The conduction enhancer is a material added with a view to increasing the electron conductivity of the active material layers 13A, 13C. Acetylene black or carbon black can be suitably used as the conduction enhancer.

Conventional methods may be used for forming the active material layers 13A, 13C. Although the active material layers 13A, 13C cover preferably most the regions on the front and rear faces of the collector 12, the active material layers 13A, 13C need not necessarily cover all the regions, so that, for instance, the edges of the collector may remain uncovered.

In the present embodiment, the distance Lₐ between the lead 15 and an end face (one end) 12a of the collector 12 in the longitudinal direction, and the distance L_{b} between the lead 15 and an end face (other end) 12b of the collector 12 in the longitudinal direction range both from 0.95Lₒₚₜ to 1.05Lₒₚₜ.

Herein, Lₒₚₜ (m)=1.9×10⁶ρ, with p denoting the electric resistivity (Ωm) of the collector 12 at 25°C.

The distance Lₐ and the distance L_{b} can be thought of as the maximum distance covered by current in the collector 12 when current is supplied to, and discharged from, the active material layers 13A, 13C via the collector 12. Also, Lₒₚₜ is the optimal value of this maximum distance, and is determined by the electric resistivity of the collector 12. In the present embodiment, therefore, the distance Lₐ and the distance L_{b} range from 95 to 105% of the optimal value Lₒₚₜ.

An electrochemical device using such an electrode has enhanced characteristics, with extremely low impedance and leakage current values. Leakage current tends to increase when the distances Lₐ and L_{b} are smaller than 0.95Lₒₚₜ, while the impedance of the electrochemical device tends to increase when the distances Lₐ and L_{b} exceed 1.05Lₒₚₜ.

### Second embodiment

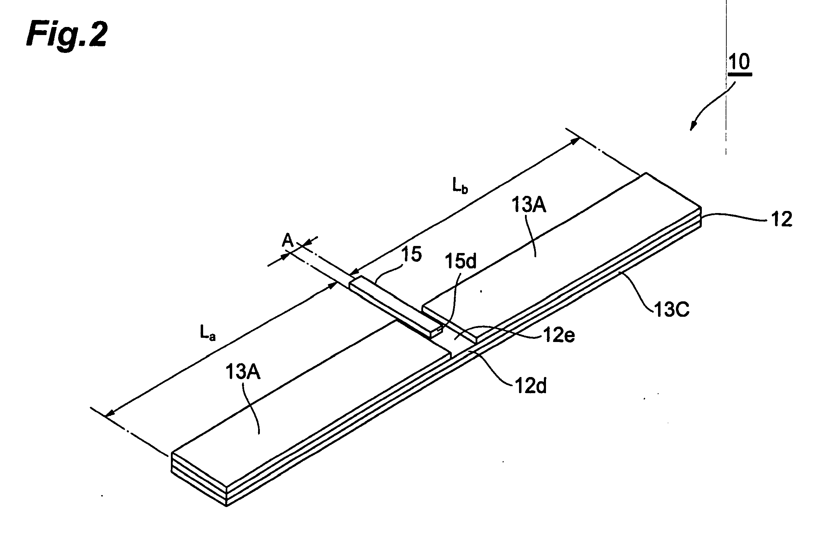

An electrode-for-electrochemical devices 10 according to a second embodiment is explained next with reference to Fig. 2. The electrode for electrochemical- devices 10 according to the present embodiment differs from the electrode for electrochemical devices according to the first embodiment in the shape of the lead 15, and thus only this feature will be explained. In the lead 15 according to the second embodiment, the end face 15d does not protrude up to the side face 12d of the collector 12, but is positioned over the surface 12e of the collector 12. Such an electrode for electrochemical devices 10 elicits the same effect as that of the first embodiment.

### Third embodiment

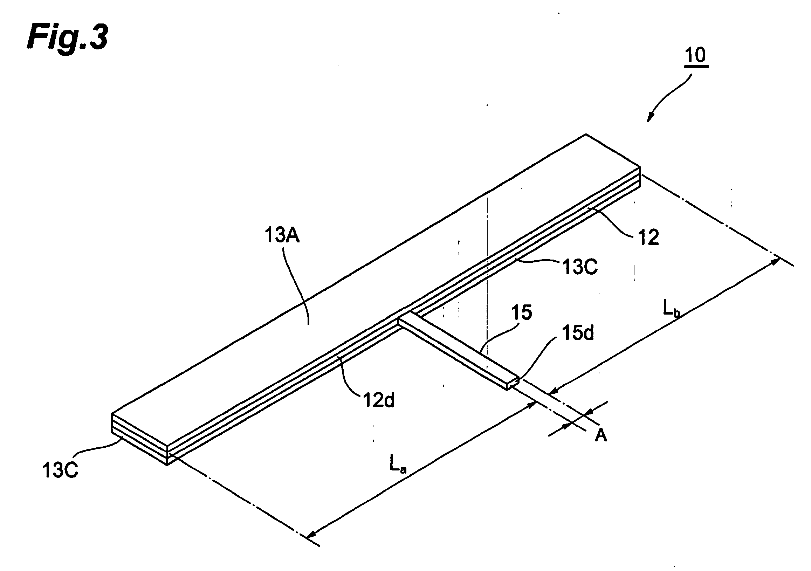

An electrode for electrochemical devices 10 according to a third embodiment is explained next with reference to Fig. 3. The electrode for electrochemical devices 10 according to the present embodiment differs from the electrode for electrochemical devices according to the first embodiment in the shape of the lead 15, and thus only this feature will be explained. The lead 15 according to the third embodiment is not provided on the front face or rear face of the collector 12 but on the side face 12d of the collector 12. As a result, the active material layer 13A is not split but formed as a single unit, as is the case with the active material layer 13C. Such a lead 15 can be easily formed by cutting the collector 12 and the lead 15 out of a single conductive plate. Such an electrode for electrochemical devices 10 elicits the same effect as that of the first embodiment.

### Fourth embodiment

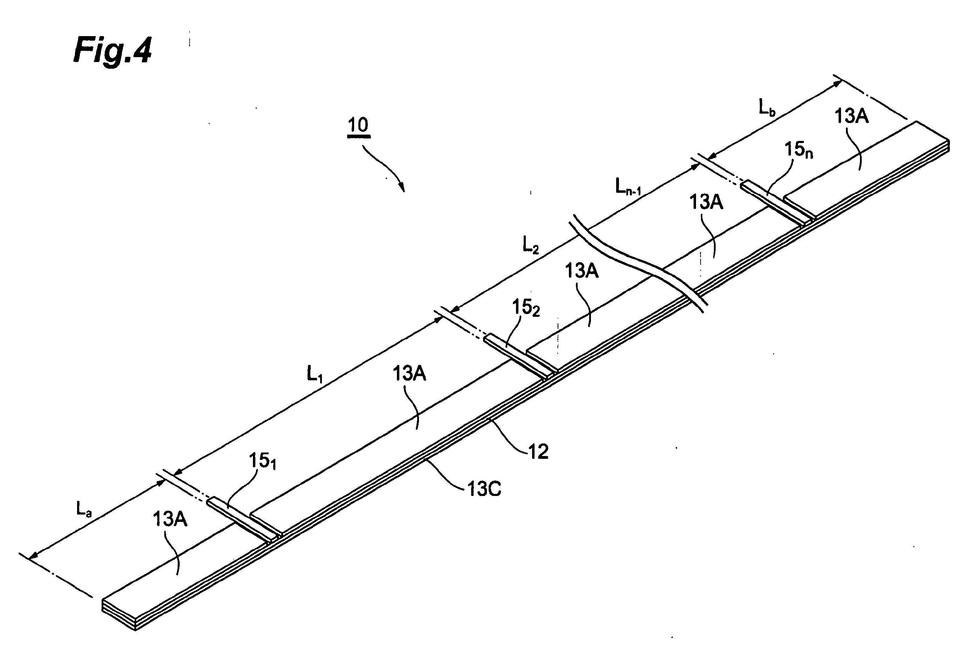

An electrode for electrochemical devices 10 according to a fourth embodiment is explained next with reference to Fig. 4. In the electrode for electrochemical devices 10 according to the present embodiment the length of the collector 12 in the longitudinal direction is longer than is the case in the electrode for electrochemical devices 10 of the first -embodiment. Also, there are provided n spaced-apart leads 15 in the longitudinal direction of the collector 12, n being an integer equal to 2 or higher. The n leads are sequentially denoted as 15₁, 15₂,..., 15ₙ, from the left of Fig. 4. The distances Lₐ and L_{b} are defined in the same way as in the first embodiment and lie within the same ranges as prescribed in the first embodiment. Preferably, the number n is for instance about n=4.

Herein, L₁ denotes the distance between adjacent leads 15₁, 15₂, L₂ the distance between adjacent leads 15₂, 15₃, ... and Lₙ₋₁ the distance between adjacent leads lead 15ₙ₋₁, 15ₙ. In the present embodiment, the distances L₁,L₂,..., Lₙ₋₁ are set so as to satisfy the condition that (L₁/2),(L₂/2),..., (Lₙ₋₁/2) range all from 0.95Lₒₚₜ to 1.05Lₒₚₜ.

As is the case with Lₐ and L_{b} in the first embodiment, (L₁/2),(L₂/2),..., (Lₙ₋₁/2) can be thought of as the maximum distances covered by the current in the collector 12 when current is supplied to, and charging is carried out in, the electrode 10. Also, Lₒₚₜ is the optimal value of the largest distance. In the present embodiment, not only the distance La and the distance Lb but also (L₁/2), (L₂/2),...,(Lₙ₋₁/2) range all from 95% to 105% of the optimal value.

Such an electrode for electrochemical devices 10 elicits the same effect as that of the first embodiment Needless to say, the electrode of the second embodiment and the third embodiment may be provided as a plurality of electrodes, as in the fourth embodiment

### Electrochemical device

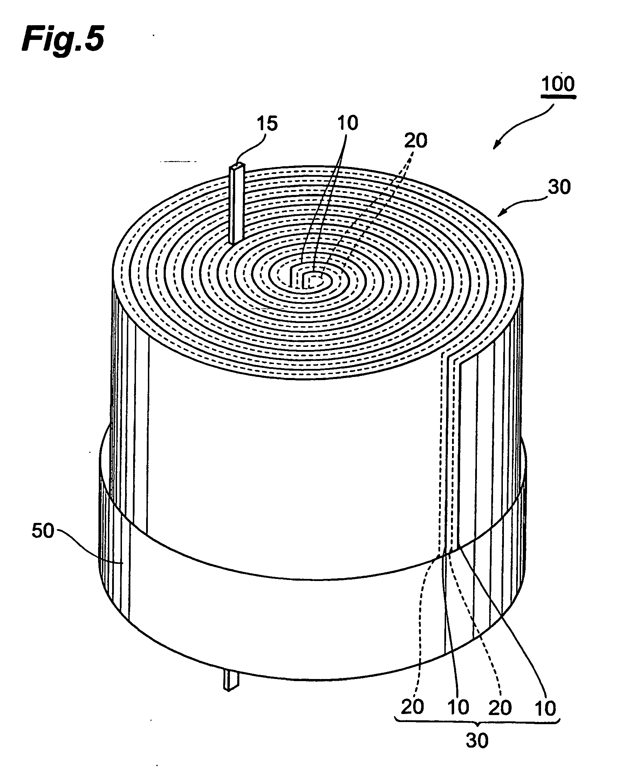

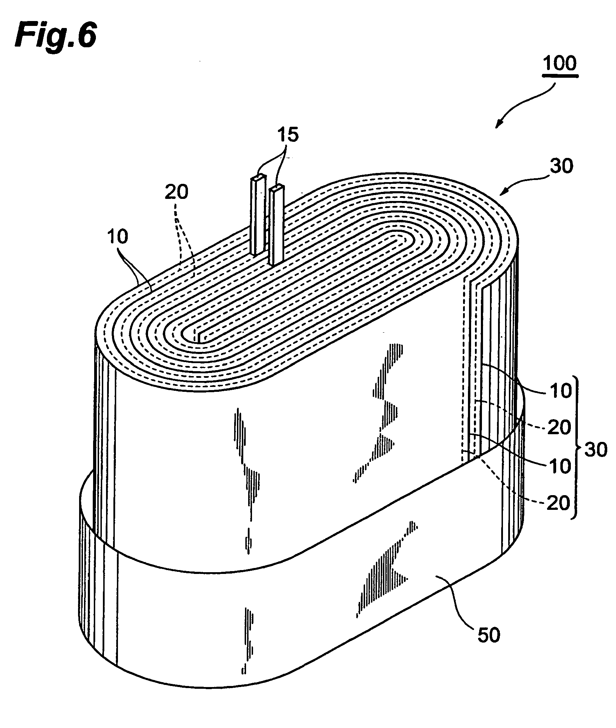

An electrochemical device using the above-described electrode 10 is explained next with reference to Figs. 5 and 6. The-electrochemical device explained herein uses the electrode for electrochemical devices of the first embodiment, but may equally use the electrode for electrochemical devices of any of the other embodiments.

An electrochemical device 100 illustrated in Figs. 5 and 6 comprises a case 50, a wound body 30 and an electrolyte solution, omitted in the figure, held in the case and impregnating the wound body 30.

The case 50 seals the wound body 30 and prevents intrusion of air and moisture into the interior of the case. The material used in the case 50 may be, for instance, a synthetic resin such as an epoxy resin, a laminate film in which a metal sheet of aluminum or the like is coated with a resin. The lead 15 of the wound body 30 protrudes out of the case 50.

The electrolyte solution (not shown) fills the inner space of the case 50. Part of the electrolyte solution is contained in the interior of an electrode 10, an electrode 10 and a separator 20.

In the case of a lithium-ion secondary battery, for instance, the electrolyte solution used may be, for instance, a nonaqueous electrolyte solution in which a lithium salt is dissolved in an organic solvent Examples of the lithium salt include, for instance, LiPF₆, LiClO₄, LiBF₄, LiAsF₆, LiCF₃SO₃, LiCF₃CF₂SO₃, LiC(CF₃SO₂)₃, LiN(CF₃SO₂)₂, LiN(CF₃CF₂SO₂)₂, LiN(CF₃SO₂)(C₄F₉SO₂) and LiN(CF₃CF₂CO)₂.

In the case of an electric double-layer capacitor, for instance, there can be used an electrolyte solution obtained by dissolving a quaternary ammonium salt such as tetraethylammonium tetrafluoroborate (TEA⁺BF₄⁻) or triethylmonomethylammonium tetrafluoroborate (TEMA⁺BF₄⁻) in an organic solvent

These salts may be used singly or in combinations of two or more. The electrolyte solution may form a gel through addition of a polymer or the like.

Known solvents used in electrochemical devices may be employed as the organic solvent. Preferred examples thereof include, for instance, propylene carbonate, ethylene carbonate and diethyl carbonate. These organic solvents may be used singly or in mixtures of two or more at arbitrary mixing ratios.

The wound body 30 is obtained by winding, in the longitudinal direction, a pair of the above-described electrodes for electrochemical devices 10, 10, in such a manner that a separator 20 is interposed between the electrodes for electrochemical devices 10, 10.

Specifically, for instance, a stack resulting from stacking an electrode 10/ separator 20 / electrode 10 / separator 20 is wound into a tubular form, starting form one end of the stack, to yield the wound body 30 illustrated in Fig. 5, having a substantially tubular cross section. Also, the above-described stack may be wound several times, starting from one end, while bending the stack into a flat form, to yield the wound body 30 illustrated in Fig. 6, having a substantially oval cross section.

The position at which the leads 15 protrude may lie in the same direction between electrodes, as illustrated in Fig. 6, or in mutually opposing directions between electrodes, as illustrated in Fig. 5.

The separator 20, which provides electric insulation between the electrodes for electrochemical devices 10, 10, is an electrically insulating porous member. The material of the separator is not particularly limited, and there may be used various separator materials. Examples of electrically insulating porous members include, for instance, a stretched film of a single-layer or a multilayer film comprising polyethylene, polypropylene or a polyolefin, or of a mixture of the foregoing resins, or, alternatively, a fibrous nonwoven fabric comprising at least one constituent material selected from the group consisting of cellulose, polyester and polypropylene.

In such an electrochemical device there must be used an electrode for electrochemical devices in which Lₐ and L_{b}, or Lₐ, L_{b}, (L₁/2), (L₂/2),... and (Lₙ₋₁/2) are as prescribed above. Both impedance and leakage current are small in such an electrochemical device.

The present invention is not limited to the above embodiments, and may accommodate various modifications. In the above embodiments, for instance, the collector is shaped as an elongated plate, but the collector need only be a thin a long member, i.e. need only have a longitudinal direction. The collector may thus be shaped, for instance, as an elongated wire.

The electrochemical device is not limited to batteries such as lithium-ion secondary batteries, or to electric double-layer capacitors, and may also be realized in, for instance, electrolytic capacitors or the like.

### Examples

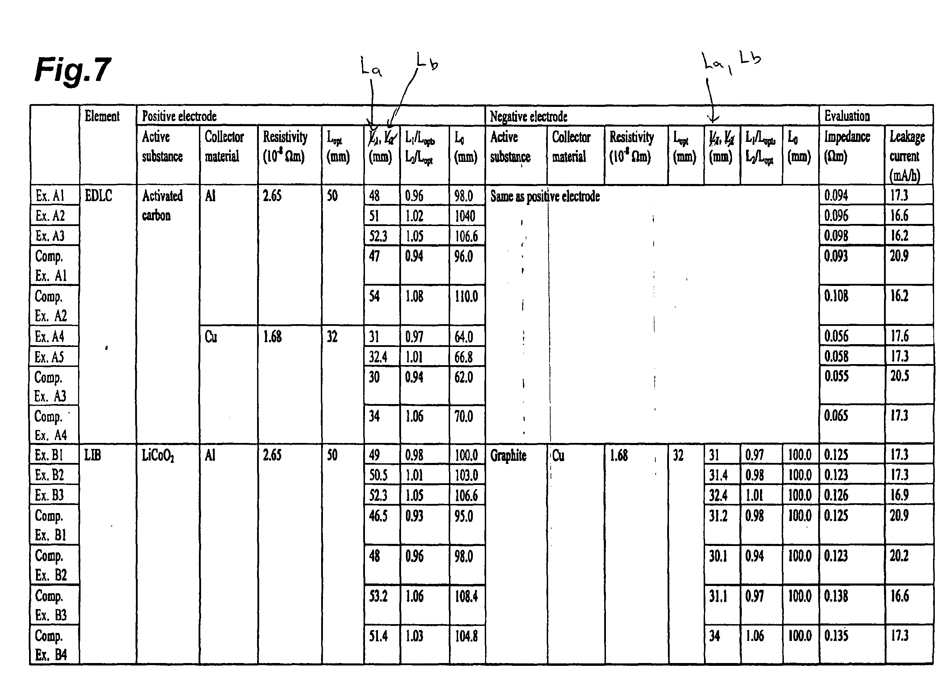

Electric double layer capacitor (EDLC): Examples A1 to A3, Comparative examples A1 and A2
A- coating- material was prepared by mixing activated carbon particles, as the active material, and PVDF as the binder, to a ratio active material: binder = 70:30; then N-methyl pyrrolidone was added to the obtained mixture, and the whole was kneaded. The coating material was coated, using a doctor blade, onto both faces of 30 µm aluminum foil, except at the portion intended for lead placing. The resulting coating films were then dried. The aluminum foil having formed thereon the coating films was then punched into a rectangle, and then a lead having a width A of 2 mm, a length of 25 mm and a thickness of 0.1 mm was ultrasonically welded to the uncoated portion of the collector, as illustrated in Fig. 1, to yield a pair of electrodes for an electric double-layer capacitor. The length L₀ of the collector in the longitudinal direction, and distances Lₐ, L_{b} from the ends of the collector to the lead were set as given in Fig. 7 for the various examples and comparative examples. The width W₀ of the collector was 10 mm.

Both faces of one of the obtained electrodes were covered with a nonwoven fabric of regenerated cellulose (thickness 30 µm), after which the electrode was disposed opposite the other electrode, and the resulting stack was wound into a tubular shape, from one end of the stack. The wound stack was fitted into a case made of aluminum laminate film, the lead was drawn out through the opening of the laminate film, and the opening was thermocompression-bonded, flanking the lead portion. An electrolyte solution for electric double-layer capacitors was poured onto the stack through the last remaining opening of the outer bag of aluminum laminate in which the stack was placed. The remaining opening was then sealed through vacuum thermocompression bonding, followed by aging, to yield the various electric double-layer capacitors. The electrolyte solution was a solution of tetraethylammonium tetrafluoroborate (TEA⁺BF₄⁻), the electrolyte, dissolved in propylene carbonate (PC), as an organic solvent. The electrolyte concentration in the electrolyte solution was 1.0 mol/L.

### Electric double-layer capacitor: Examples A4 to A5, Comparative examples A3 and A4

Electric double-layer capacitors were obtained in the same way as in Example 1, but using herein 17 µm-thickness copper foil instead of aluminum foil, with L₀, Lₐ and L_{b} set as in Fig. 7.

### Lithium-ion secondary battery (LIB): Examples B1 to B3, Comparative examples B1 to B4

Cathode electrodes were manufactured in accordance with the procedure below. Firstly there were prepared LiCoO₂ as a positive electrode active material, acetylene black as a conduction enhancer and polyvinylidene fluoride (PVdF) as a binding agent. These were mixed and dispersed in a planetary mixer to relative weights of positive electrode active material: conduction enhancer: binding agent = 90:6:4. Thereafter, the viscosity of the resulting dispersion was adjusted through addition of a suitable amount of NMP, as a solvent, to yield a slurry-like cathode coating liquid (slurry).

Aluminum foil (thickness 20 µm) was prepared next as the collector, and the cathode coating liquid was coated to an active material carrying amount of 1.0 mg/cm², onto both faces of the aluminum foil, except at the portion planned for lead welding, using a doctor blade. This was followed by pressing using a calender roll, to a porosity of 28% of the coated active material layers. The pressed product was punched into a rectangle, to yield the cathode electrode. The distances L₀, Lₐ, L_{b} were set as in Fig. 7, and the width W₀ was 10 mm.

Anode electrodes were manufactured next in accordance with the procedure below. Firstly there were prepared natural graphite as a negative electrode active material and polyvinylidene fluoride (PVdF) as a binding agent. These were blended, mixed and dispersed in a planetary mixer to relative weights of negative electrode active material: binding agent = 95:5). Thereafter, the viscosity of the resulting dispersion was adjusted through addition of a suitable amount of NMP, as a solvent, to yield a slurry-like anode coating liquid. Copper foil (thickness 17 µm) was prepared next, and the anode coating liquid was coated to an active material carrying amount, on the anode electrode, of 3.0mg/cm², onto both faces of the copper foil, except at the portion planned for lead welding, using a doctor blade. This was followed by pressing using a calender roll, to a porosity of 30% of the active material layers of the anode electrode. The pressed product was punched into a rectangle, to yield the anode electrode. The distances L₀, Lₐ, L_{b} were set as Fig. 7, and the width W₀ was 10 mm.

Both faces of one of the obtained electrodes were covered with a single-layer polyethylene porous film (thickness 12 µm), as a separator, after which the electrode was disposed opposite the other electrode, and the resulting stack was wound into a tubular shape, from one end of the stack. The wound stack was fitted into a case made of aluminum laminate film the lead was drawn out through the opening of the laminate film, and the opening was thermocompression bonded, flanking the lead portion. An electrolyte solution for lithium-ion secondary batteries was poured onto the stack through the last remaining opening of the outer bag of aluminum laminate in which the stack was placed. The remaining opening was then sealed through vacuum thermocompression bonding, followed by aging, to yield the various lithium-ion secondary batteries.

As the electrolyte for lithium-ion secondary batteries there was used an electrolyte obtained by dissolving LiPF₆, to a concentration of 1.5 mol/dm³, in a solvent resulting from mixing propylene carbonate (PC), ethylene carbonate (EC) and diethyl carbonate (DEC), to a volume ratio of 2:1:7, respectively. To 100 parts by weight of the resulting solution there were further added 3 parts by weight of 1,3-propane sultone.

Evaluation of the electric double-layer capacitors and lithium-ion secondary batteries
The electric double-layer capacitors and lithium-ion secondary batteries of the examples and comparative examples were measured for impedance and leakage current. The values are illustrated in Fig. 7. In the electric double-layer capacitors, impedance was measured in the discharged state, while leakage current was measured after charging at 4 V for 1 hour. In the lithium-ion secondary batteries, impedance was measured in a state resulting from discharge to 3 V, while leakage current was measured after charging at 4 V for 1 hour.

In Examples A1 to A3, relating to electric double-layer capacitors using collectors made of aluminum, there was achieved an impedance of less than 100 mΩ. In Examples A4 and A5, relating to electric double-layer capacitors using collectors made of copper, there was achieved an impedance of less than 60 mΩ. In Examples B1 to B3, relating to lithium-ion secondary batteries, there was achieved an impedance of less than 130 mΩ. A leakage current no greater than 20 mA/h was achieved in all the examples.

## Claims

1. An electrode for an electrochemical device, comprising: an elongated collector; a lead provided halfway along a longitudinal direction of said collector; and an active material layer provided on said collector, wherein
when Lₐ (m) is a distance from one end of said collector, in the longitudinal direction, up to said lead, L_{b} (m) is a distance from the other end of said collector, in the longitudinal direction, up to said lead, and p (Ωm) is a resistivity of said collector at 25°C, where Lₒₚₜ (m) being 1.9×10⁶ρ,
the Lₐ (m) and L_{b} (m) are from 0.95 Lₒₚₜ to 1.05 Lₒₚₜ respectively.

2. An electrode for an electrochemical device, comprising: an elongated collector, n leads (n being an integer equal to 2 or greater) provided spaced apart from each other in said collector along a longitudinal direction of said collector; and an active material layer provided on said collector, wherein
when Lₐ (m) is a distance from one end of said collector, in the longitudinal direction, up to a lead closest to said one end, L_{b} (m) is a distance from the other end of said collector, in the longitudinal direction, up to a lead closest to said other end, L₁, L₂, ..., Lₙ₋₁ (m) are distances between adjacent leads, and p (Ωm) is a resistivity of said collector at 25°C, where Lₒₚₜ (m) being 1.9×10⁶ρ,
the Lₐ and L_{b} are from 0.95 Lₒₚₜ to 1.05 Lₒₚₜ respectively, and
(L₁/2), (L₂/2),..., (Lₙ₋₁/2) respectively range from 0.95 Lₒₚₜ to 1.05 Lₒₚₜ.

3. An electrochemical device, comprising a pair of electrodes, wherein both electrodes are the electrode for electrochemical devices according to claim 1.

4. An electrochemical device, comprising a pair of electrodes, wherein both electrodes are the electrode for electrochemical devices according to claim 2.

## Patentansprüche

1. Elektrode für eine elektrochemische Vorrichtung, die umfasst:
einen länglichen Kollektor;
eine Zuleitung, die in einer Längsrichtung des Kollektors in der Mitte vorhanden ist; und
eine Schicht aus aktivem Material, die auf dem Kollektor vorhanden ist, wobei
wenn Lₐ (m) ein Abstand von einem Ende des Kollektors in der Längsrichtung bis zu der Zuleitung ist, L_{b}(m) ein Abstand von dem anderen Ende des Kollektors in der Längsrichtung bis zu der Zuleitung ist, und p (Ωm) ein spezifischer Widerstand des Kollektors bei 25°C ist und Lₒₚₜ(m) 1,9x10⁶ p beträgt, die Werte für Lₐ (m) und L_{b}(m) jeweils von 0,95 Lₒₚₜ bis 1,05 Lₒₚₜ reichen.

2. Elektrode für eine elektrochemische Vorrichtung, die umfasst:
einen länglichen Kollektor,
n Zuleitungen (wobei n eine ganze Zahl gleich oder größer als 2 ist), die voneinander beabstandet an dem Kollektor in einer Längsrichtung des Kollektors vorhanden sind; und
eine Schicht aus aktivem Material, die an dem Kollektor vorhanden ist, wobei wenn Lₐ (m) ein Abstand von einem Ende des Kollektors in der Längsrichtung bis zu einer Zuleitung ist, die sich am nächsten an dem einen Ende befindet, L_{b} (m) ein Abstand von dem anderen Ende des Kollektors in der Längsrichtung bis zu einer Zuleitung ist, die sich am nächsten an dem anderen Ende befindet, L₁, L₂,..., Lₙ₋₁ (m) Abstände zwischen benachbarten Zuleitungen sind und p (Ωm) ein spezifischer Widerstand des Kollektors bei 25°C ist und Lₒₚₜ (m) 1,9x10⁶ p beträgt,
die Werte für Lₐ und L_{b} jeweils von 0,95 Lₒₚₜ bis 1,05 Lₒₚₜ reichen, und
für (L₁/2), L₂/2),..., Lₙ₋₁/2) jeweils von 0,95 Lₒₚₜ bis 1,05 Lₒₚₜ reichen.

3. Elektrochemische Vorrichtung, die ein Paar Elektroden umfasst, wobei beide Elektroden die Elektrode für elektrochemische Vorrichtungen nach Anspruch 1 sind.

4. Elektrochemische Vorrichtung, die ein Paar Elektroden umfasst, wobei beide Elektroden die Elektrode für elektrochemische Vorrichtungen nach Anspruch 2 sind.

## Revendications

1. Électrode pour un dispositif électrochimique, comprenant : un collecteur allongé, un conducteur disposé à mi-chemin le long d'une direction longitudinale dudit collecteur, et une couche de matière active disposée sur ledit collecteur, dans laquelle
lorsque Lₐ (m) est une distance allant d'une extrémité dudit collecteur, dans la direction longitudinale, jusqu'audit conducteur, que L_{b} (m) est une distance allant de l'autre extrémité dudit collecteur, dans la direction longitudinale, jusqu'audit conducteur, et que p (Ωm) est une résistivité dudit collecteur à 25 °C, où Lₒₚₜ (m) vaut 1,9×10⁶ρ,
les valeurs Lₐ (m) et L_{b} (m) vont respectivement de 0,95 Lₒₚₜ à 1,05 Lₒₚₜ.

2. Électrode pour un dispositif électrochimique, comprenant : un collecteur allongé, n conducteurs (n étant un entier supérieur ou égal à 2) disposés espacés les uns des autres dans ledit collecteur le long d'une direction longitudinale dudit collecteur, et une couche de matière active disposée sur ledit collecteur, dans laquelle
lorsque Lₐ (m) est une distance allant d'une extrémité dudit collecteur, dans la direction longitudinale, jusqu'à un conducteur le plus proche de ladite extrémité, que L_{b} (m) est une distance allant de l'autre extrémité dudit collecteur, dans la direction longitudinale, jusqu'à un conducteur le plus proche de ladite autre extrémité, que L₁, L₂, ..., Lₙ₋₁ (m) sont des distances entre des conducteurs adjacents, et que p (Ωm) est une résistivité dudit collecteur à 25 °C, où Lₒₚₜ (m) vaut 1,9 × 10⁶ρ,
les valeurs La et L_{b} vont respectivement de 0,95 Lₒₚₜ à 1,05 Lₒₚₜ, et
(L₁/2), (L₂/2), ..., (Lₙ₋₁/2) vont respectivement de 0,95 Lₒₚₜ à 1,05 Lₒₚₜ.

3. Dispositif électrochimique, comprenant un couple d'électrodes, dans lequel les deux électrodes sont l'électrode pour dispositifs électrochimiques selon la revendication 1.

4. Dispositif électrochimique, comprenant un couple d'électrodes, dans lequel les deux électrodes sont l'électrode pour dispositifs électrochimiques selon la revendication 2.
